# EUROPEAN PATENT APPLICATION

(11) **EP 4 851 209 A1**
(43) Date of publication of application: **09.12.2026**
(21) Application number: 26181588.0
(22) Date of filing: 28.05.2026
(51) Int. Cl.: C08G 59/42, C08G 59/14, C08G 59/28, C08G 59/50, C08G 59/62

(54) **UNDERFILL COMPOSITION**

(30) Priority: 05.06.2025 JP 2025093875
(71) Applicant: SHIN-ETSU CHEMICAL CO., LTD., Chiyoda-ku, Tokyo 1000005 (JP)
(72) Inventor: Ito, Yuri, Annaka-shi (JP); Kushihara, Naoyuki, Annaka-shi (JP)
(74) Representative: Angerhausen, Christoph

(57) **Abstract**

Provided is an underfill composition with which occurrence of cracks during reflow is reduced and that is superior in heat resistance by virtue of having a high glass transition temperature. The underfill composition contains the components of: (A) a biscitraconimide compound expressed by: 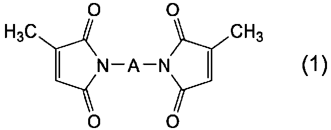 wherein A represents a divalent organic group; (B) an epoxy resin having at least two epoxy groups; (C) an epoxy resin curing agent; (D) a curing accelerator; and (E) an inorganic filler, wherein a percentage of epoxy resins having three or more epoxy groups in the component (B) is 10% by mass or less based on the whole mass of the composition, and a cured product of the composition has a glass transition temperature as measured by TMA of 140°C or higher and a storage modulus at 260°C as measured by DMA of 0.10 GPa or less.

## Description

### BACKGROUND OF THE INVENTION

### Field of the Invention

The present invention relates to an underfill composition.

### Background Art

The dominant process for mounting semiconductor chips has shifted to surface mounting in place of pin insertion, driven by the trend of electronic devices becoming smaller, lighter, and more sophisticated. Among other surface mounting methods, the flip chip method is a semiconductor chip mounting technique where a semiconductor chip is mounted on the wiring pattern surface of an organic substrate using multiple solder bumps. An underfill material is filled to bridge the gap between the organic substrate and the semiconductor chip, as well as the gaps between the individual solder bumps (JP-A-2022-63247).

To address demand for semiconductor devices, such as greater sophistication, higher integration, and higher speeds, attempts to increase the size of semiconductors and wiring boards and reduce the thickness of wiring boards are ongoing. Therefore, in the flip chip method, in which solder bump connection is performed, the cured product of the underfill composition may fail to follow expansion of the bumps and the semiconductor chip when the elastic modulus of the cured product of the underfill composition at the reflow temperature is high. In such a case, cracks may occur due to stress concentration.

The elastic modulus of a cured product of an underfill composition can be reduced by reducing the crosslink density. However, reducing the crosslink density may lower the glass transition temperature, potentially causing a problem in heat resistance.

### SUMMARY OF THE INVENTION

Accordingly, it is an object of the present invention to provide an underfill composition with which occurrence of cracks during reflow is reduced and that is superior in heat resistance by virtue of having a high glass transition temperature.

The inventors of the present invention diligently conducted a series of studies to solve the above problem, and have found that when an underfill composition containing (A) a biscitraconimide compound, (B) an epoxy resin, (C) an epoxy resin curing agent, (D) a curing accelerator, and (E) an inorganic filler is made into a cured product, the above-mentioned object is achieved as a result of a low elastic modulus and a high glass transition temperature (Tg), and thus have completed the invention.

The present invention relates to the following.
<1> An underfill composition comprising the components of:
   (A) a biscitraconimide compound expressed by the following formula (1) in an amount of 25 to 75% by mass based on the whole mass of the composition: 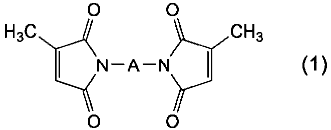 wherein A in the formula (1) represents a divalent organic group;
   (B) an epoxy resin having at least two epoxy groups per each molecule in an amount of 0.1 to 20% by mass based on the whole mass of the composition;
   (C) an epoxy resin curing agent in an amount such that a molar equivalent ratio of epoxy-reactive functional groups in the component (C) to 1 mol of epoxy groups in the component (B) is 0.05 to 8.0;
   (D) a curing accelerator in an amount of 0.0001 to 15% by mass based on the whole mass of the composition; and
   (E) an inorganic filler in an amount of 20 to 60% by mass based on the whole mass of the composition, wherein a percentage of epoxy resins having three or more epoxy groups per each molecule in the component (B) is 10% by mass or less based on the whole mass of the composition, and a cured product of the composition has a glass transition temperature as measured by thermomechanical analysis of 140°C or higher and a storage modulus at 260°C as measured by dynamic mechanical analysis of 0.10 GPa or less.
<2> The underfill composition according to <1>, wherein A in the formula (1) is a group selected from dimer acid frame-derived hydrocarbon groups, and the groups expressed by the following structures: 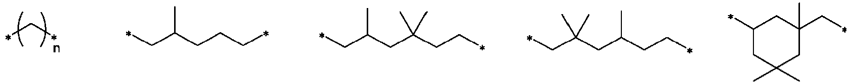 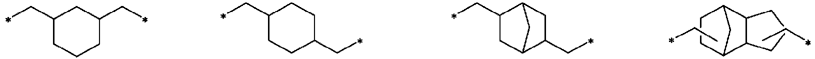 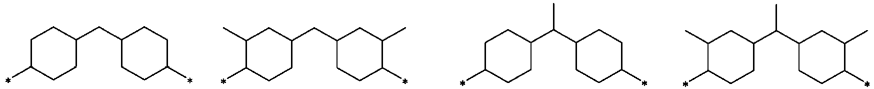 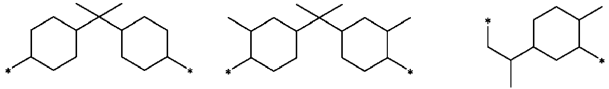 wherein each * represents a bond to a nitrogen atom in the citraconimide group; and n is 1 to 20.
<3> The underfill composition according to <1> or <2>, wherein the component (A) has a number average molecular weight of 200 to 10,000.
<4> The underfill composition according to any one of <1> to <3>, wherein the epoxy resin curing agent (C) is at least one selected from an amine compound, a phenolic compound, an acid anhydride compound, and an active ester compound.
<5> The underfill composition according to any one of <1> to <4>, wherein the curing accelerator (D) is at least one selected from an imidazole-based curing accelerator, an organic phosphorus-based curing accelerator, and a tertiary amine-based curing accelerator.
<6> The underfill composition according to any one of <1> to <5>, wherein the inorganic filler (E) is a spherical sol-gel silica having an average particle diameter of 0.01 to 5 µm.

The underfill composition of the present invention has a high glass transition temperature and is superior in heat resistance. Further, by virtue of the storage modulus at a high temperature being 0.10 GPa or less, occurrence of cracks during reflow is reduced. The composition of the present invention is therefore suitable as an underfill composition having high reliability.

### DETAILED DESCRIPTION OF THE INVENTION

The present invention is described in detail hereunder.

### (A) Biscitraconimide Compound

A component (A) used in the present invention is a biscitraconimide compound. The citraconimide group is a group obtained by substituting one hydrogen atom in a maleimide group with a methyl group. Due to the effect of this methyl group, and as compared to a maleimide compound having the same frame, such a cured product not only exhibits a lower permittivity and a lower dielectric tangent, but the compound itself also has a lower melting point such that compatibility thereof to other components will be improved as well.

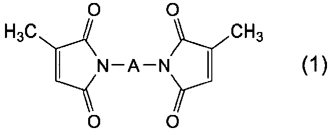

In the formula (1), A represents a divalent organic group.

Such a biscitraconimide compound is preferred because of availability of a diamine compound as a raw material, excellent solubility in a solvent, and ease of synthesis.

Although the properties under room temperature and the number average molecular weight of the biscitraconimide compound as the component (A) are not particularly limited, it is preferred that the number average molecular weight be 200 to 10,000, more preferably 200 to 5,000, even more preferably 200 to 2,000.

The term "number average molecular weight" as used herein refers to a number average molecular weight calculated from the results of measurement of a ¹H-NMR spectrum performed under the conditions as set forth in the following.

### Measurement Conditions

Instrument: AVANCE III 400 by Bruker Corporation
Measurement frequency: 400 MHz
Sample concentration: 1% by mass (solvent: CDCl₃)
Measurement temperature: 25°C
Internal standard: tetramethylsilane (TMS)

Further, in order to achieve a low elasticity after being cured and reduced viscosity of the underfill composition, it is more preferred that the divalent organic group represented by "A" in the biscitraconimide compound be one selected from dimer acid frame-derived hydrocarbon groups, and the groups expressed by the following structures: 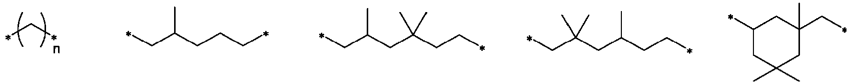 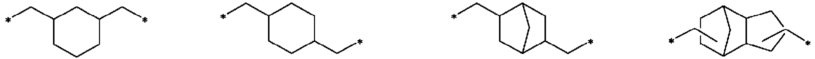 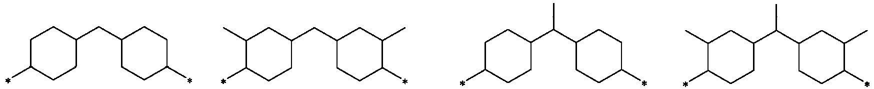 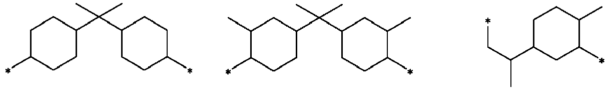 wherein each * represents a bond to a nitrogen atom in the citraconimide group; n is 1 to 20.

The term "dimer acid" as used herein refers to a liquid dibasic acid whose major component is a dicarboxylic acid having 36 carbon atoms, and is produced by dimerizing unsaturated fatty acids having 18 carbon atoms and whose raw material is a natural ingredient such as a vegetable fat or oil. A dimer acid frame is not limited to a single type of frame but may have multiple types of structures, where there may exist several types of isomers thereof. Typical dimer acids are grouped into the categories of (a) linear type, (b) monocyclic type, (c) aromatic ring type, and (d) polycyclic type.

The term "dimer acid frame" as used herein refers to a group derived from a dimer diamine having a structure established by substituting the carboxy group(s) in such a dimer acid with a primary aminomethyl group.

That is, as the dimer acid frame-derived hydrocarbon group of the biscitraconimide compound as the component (A), it is preferred that the hydrocarbon group be a branched divalent hydrocarbon group obtained by substituting the two carboxy groups in any of the dimer acids represented by the following formulae (a) to (d) with methylene groups.

Further, when the biscitraconimide compound as the component (A) contains a dimer acid frame-derived hydrocarbon group, it is more preferred that such a dimer acid frame-derived hydrocarbon group have fewer carbon-carbon double bonds through hydrogenation for enhancing the heat resistance and reliability of the cured product.

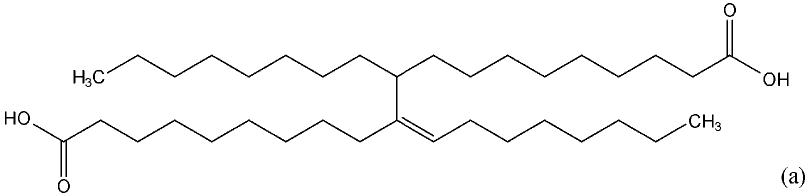

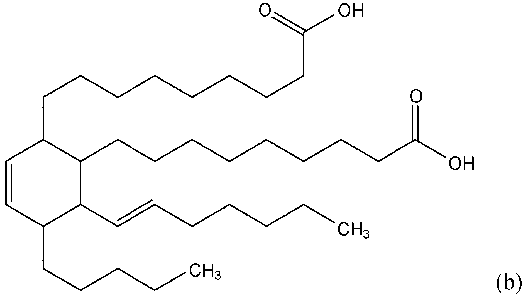

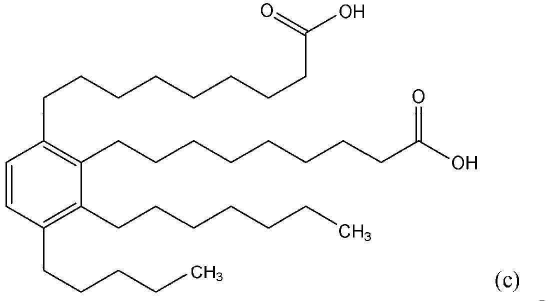

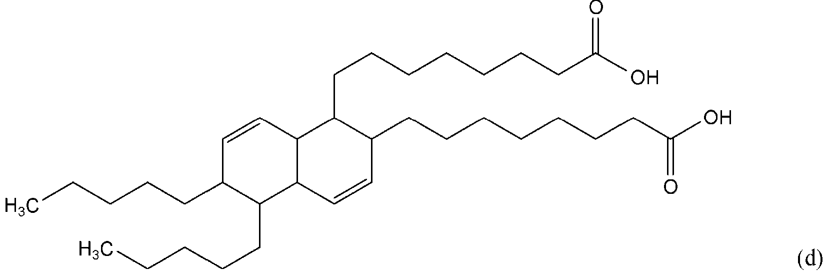

The biscitraconimide compound as the component (A) may be used alone, or two or more of them may be used in combination.

In the underfill composition of the present invention, it is preferred that the component (A) be contained in an amount of 25 to 75% by mass, more preferably 35 to 65% by mass, even more preferably 40 to 60% by mass, based on the whole mass of the composition.

### (B) Epoxy Resin

An epoxy resin (B) is added to promote a reaction of the biscitraconimide compound (A).

The epoxy resin (B) has at least two epoxy groups per each molecule, and there may be used an epoxy resin known in the art.

Examples thereof include bisphenol-type epoxy resins such as a bisphenol A-type epoxy resin, a bisphenol F-type epoxy resin, and a bisphenol S-type epoxy resin; novolac-type epoxy resins such as a phenol novolac-type epoxy resin, a cresol novolac-type epoxy resin, a bisphenol A novolac-type epoxy resin, and a bisphenol F novolac-type epoxy resin; alicyclic epoxy resins such as a dicyclopentadiene-type epoxy resin and 3,4-epoxycyclohexenylmethyl-3',4'-epoxycyclohexene carboxylate; polyfunctional phenol-type epoxy resins such as a resorcinol-type epoxy resin and a resorcinol novolac-type epoxy resin; a stilbene-type epoxy resin; a triazine frame-containing epoxy resin; a fluorene frame-containing epoxy resin; a triphenolalkane-type epoxy resin; a biphenyl-type epoxy resin; a xylylene-type epoxy resin; a biphenyl aralkyl-type epoxy resin; a naphthalene-type epoxy resin; diglycidyl ether compounds of polycyclic aromatics such as anthracene; and a phosphorus-containing epoxy resin obtained by introducing a phosphorus compound into any of these resins and compounds. Particularly, a bisphenol A-type epoxy resin, a dicyclopentadiene-type epoxy resin, a biphenyl aralkyl-type epoxy resin, and a naphthalene-type epoxy resin are preferably used.

They may be used alone, or two or more of them may be used in combination.

The component (B) is in an amount of 0.1 to 20% by mass, preferably 0.5 to 15% by mass, more preferably 1 to 10% by mass, based on the whole mass of the composition. Furthermore, in the component (B), the percentage of epoxy resins having three or more epoxy groups per each molecule is 10% by mass or less, preferably 0% by mass or more and 5% by mass or less, based on the whole mass of the composition. The fact that the lower limit to the amount of epoxy resins having three or more epoxy groups per each molecule based on the whole mass of the composition is 0% by mass means that all of the component (B) may be composed of epoxy resin(s) having two epoxy groups per each molecule. When the amount of the epoxy resin (B) contained is within these ranges, there can be obtained a cured product having a low elastic modulus.

### (C) Epoxy Resin Curing Agent

An epoxy resin curing agent (C) is added for making it react with the epoxy groups contained in the epoxy resin (B). The epoxy resin curing agent may simply be that containing a functional group(s) reactive with epoxy groups; particularly, preferred is at least one kind selected from an amine compound, a phenolic compound, an acid anhydride compound, and an active ester compound. Of these, a phenolic compound is more preferred in view of the dielectric property of the composition.

As an amine compound, a generally known amine compound may be used. An aromatic amine compound is preferred in terms of handling property and moisture resistance reliability. Preferred Examples thereof include an aromatic diaminodiphenylmethane compound such as 3,3'-diethyl-4,4'-diaminodiphenylmethane, 3,3',5,5'-tetramethyl-4,4'-diaminodiphenylmethane, or 3,3',5,5'-tetraethyl-4,4'-diaminodiphenylmethane; 2,4-diaminotoluene; 1,4-diaminobenzene; and 1,3-diaminobenzene. More preferred are aromatic diaminodiphenylmethane compounds such as 3,3'-diethyl-4,4'-diaminodiphenylmethane, 3,3',5,5'-tetramethyl-4,4'-diaminodiphenylmethane, and 3,3',5,5'-tetraethyl-4,4'-diaminodiphenylmethane. They may be used alone, or two or more of them may be used in combination.

The amine compound may be either a liquid or a solid at normal temperature (20 to 30°C). An amine compound being a liquid at normal temperature may be added as it is without problem. However, in the case of an amine compound being a solid at normal temperature, if such a compound is added as it is, the viscosity of the resin composition will rise, and workability will thus be significantly impaired; it is therefore preferred that such amine compound be previously melted and mixed with the above-mentioned epoxy resin. More specifically, it is preferred that such an amine compound be melted and mixed with the epoxy resin at a later-described particular compounding ratio and at a temperature within the range of 70 to 150°C for 1 to 2 hours. If the mixing temperature is lower than 70°C, the amine compound may not be compatible enough; if the mixing temperature is higher than 150°C, a rise in viscosity may be observed due to the reaction with the epoxy resin. Further, if the mixing time is shorter than 1 hour, a rise in viscosity may be incurred due to insufficient compatibility of the amine compound; if the mixing time is longer than 2 hours, a rise in viscosity may be observed due to the reaction with the epoxy resin.

As the phenolic compound, a generally known phenolic compound may be used. Examples thereof include a phenol novolac resin, a naphthalene ring-containing phenolic resin, an aralkyl-type phenolic resin, a triphenolalkane-type phenolic resin, a biphenyl frame-containing aralkyl-type phenolic resin, a biphenyl-type phenolic resin, an alicyclic phenolic resin, a heterocyclic phenolic resin, a naphthalene ring-containing phenolic resin, a resorcinol-type phenolic resin, an allyl group-containing phenolic resin such as a novolac-type allylphenol resin, and a bisphenol-type phenolic resin such as a bisphenol A-type resin or a bisphenol F-type resin. They may be used alone, or two or more of them may be used in combination.

As the acid anhydride compound, a generally known acid anhydride compound may be used. Examples thereof include 4-methylcyclohexane-1,2-dicarboxylic acid anhydride, 3,4-dimethyl-6-(2-methyl-1-propenyl)-1,2,3,6-tetrahydrophthalic anhydride, 1-isopropyl-4-methyl-bicyclo[2.2.2]oct-5-en-2,3-dicarboxylic acid anhydride, methyltetrahydrophthalic anhydride, methylhexahydrophthalic anhydride, hexahydrophthalic anhydride, methylhimic acid anhydride, pyromellitic acid dianhydride, maleated allo-ocimene, benzophenone tetracarboxylic acid dianhydride, 3,3',4,4'-biphenyltetrabisbenzophenone tetracarboxylic acid dianhydride, (3,4-dicarboxyphenyl) ether dianhydride, bis(3,4-dicarboxyphenyl) methane dianhydride, and 2,2-bis(3,4-dicarboxyphenyl) propane dianhydride. They may be used alone, or two or more of them may be used in combination.

As the active ester compound, a generally known active ester compound may be used. Examples thereof include an active ester compound having a dicyclopentadiene-type phenolic resin structure, an active ester compound having a phenol novolac structure, an active ester compound having a naphthalene ring structure, an active ester compound having an aralkyl-type phenolic resin structure, an active ester compound having a triphenolalkane-type phenolic resin structure, an active ester compound having a biphenyl frame-containing aralkyl-type phenolic resin structure, an active ester compound having a biphenyl-type phenolic resin structure, an active ester compound having an alicyclic phenolic resin structure, an active ester compound having a heterocyclic phenolic resin structure, an active ester compound having a naphthalene ring-containing phenolic resin structure, an active ester compound having a resorcinol-type phenolic resin structure, an active ester compound having an allyl group-containing phenolic resin structure, an active ester compound having a bisphenol A-type resin structure, and an active ester compound having a bisphenol-type phenolic resin structure such as a bisphenol F-type resin structure. They may be used alone, or two or more of them may be used in combination.

The epoxy resin curing agent is added in an amount such that the molar equivalent ratio of functional groups in the epoxy resin curing agent to 1 molar equivalent of epoxy groups in the component (B) will be 0.05 to 8.0, preferably 0.1 to 4.0, particularly preferably 0.2 to 1.0. When this molar equivalent ratio is lower than 0.1, unreacted epoxy groups will remain so that adhesiveness may deteriorate; when this molar equivalent ratio exceeds 8.0, a moisture absorption rate of the cured product will increase so that cracks may occur at the time of performing reflow or temperature cycling. Here, in the present invention, the term "molar equivalent" refers to a molecular weight per one functional group.

### (D) Curing Accelerator

A curing accelerator as a component (D) may simply be one capable of promoting the curing of the biscitraconimide compound (A); there may be used a generally known curing accelerator such as an imidazole-based curing accelerator, an organic phosphorus-based curing accelerator, and a tertiary amine-based curing accelerator.

Examples of the imidazole-based curing accelerator include an imidazole compound such as 2-methylimidazole, 2-phenylimidazole, 2-ethyl-4-methylimidazole, or 2-phenyl-4-methylimidazole. Examples of the organic phosphorus-based curing accelerator include a phosphine such as triphenylphosphine, tributylphosphine, tri(p-methylphenyl)phosphine, or tri(nonylphenyl)phosphine; a phosphine-borane complex such as triphenylphosphine-triphenylborane; a phosphonium borate salt such as tetraphenylphosphonium tetraphenylborate, tetraphenylphosphonium tetra-p-tolylborate, p-tolyltriphenylphosphonium tetra-p-tolylborate, or tri-tert-butylphosphonium tetraphenylborate; and an organic phosphorus-based compound such as bis(tetrabutylphosphonium)dihydrogen pyromellitate. Examples of the tertiary amine-based curing accelerator include a tertiary amine compound such as triethylamine, benzyldimethylamine, α-methylbenzyldimethylamine, or 1,8-diazabicyclo[5.4.0]undecene-7; and a salt of a tertiary amine compound such as 1,8-diazabicyclo[5.4.0]undecene-7.

Of these, it is preferred to use an imidazole-based curing accelerator to suppress the viscosity of the composition.

The component (D) may be used alone, or two or more of them may be used in combination.

The component (D) is contained in an amount of 0.0001 to 15% by mass, more preferably 0.001 to 10% by mass, even more preferably 0.01 to 5% by mass based on the whole mass of the composition.

### (E) Inorganic Filler

An inorganic filler (E) is added to enhance the resin strength of the underfill composition and realize a lower thermal expansivity.

Examples of the inorganic filler include silicas (e.g., fused silica, crystalline silica, cristobalite), alumina, silicon nitride, aluminum nitride, boron nitride, titanium oxide, glass fibers, and magnesium oxide.

It is preferred that the particle diameter of the inorganic filler be appropriately adjusted based on the gap size of semiconductor devices, which is essentially the width of the gap between the substrate and the semiconductor chip. The gap size is typically 10 to 200 µm. In this case, in view of the viscosity of the underfill composition and the linear coefficient of expansion of the cured product, it is preferred that the inorganic filler be a spherical silica having an average particle diameter (referred to as d50 or median diameter) of 0.01 to 5 µm, more preferably of 0.05 to 2 µm.

To control the average particle diameter and particle diameter distribution of the inorganic filler (E), a spherical silica manufactured using the sol-gel method or the vaporized metal combustion method is most suitable. A spherical silica produced using any of these methods has an advantage of being perfectly spherical compared to fused silica, and its particle diameter distribution can be easily designed. Both the sol-gel and the vaporized metal combustion methods may be techniques known in the art. Specifically, from the perspective of thin film infiltration, it is more preferred to use a sol-gel silica, manufactured via the sol-gel method.

It is preferred that the inorganic filler (E) be composed of a spherical sol-gel silica in an amount of at least 80% by mass, particularly 90 to 100% by mass, in particular 95 to 100% by mass based on the whole mass of the inorganic filler (E). When this percentage is 80% by mass or more, the underfill composition exhibits favorable flowability.

The inorganic filler (E) is contained in an amount of 20 to 60% by mass, preferably 35 to 55% by mass, when the total amount of all components in the composition is defined as 100% by mass. When this percentage is less than 20% by mass, the coefficient of expansion of the cured product may be large. When this percentage exceeds 60% by mass, the elastic modulus may be high.

It is preferred that the employed inorganic filler be one that is previously surface-treated with a coupling agent such as a silane coupling agent or a titanate coupling agent to enhance the bonding strength between the inorganic filler and the components (A) and (B). Examples of such coupling agents include silane coupling agents such as an epoxysilane, e.g., 3-glycidoxypropyltrimethoxysilane, 3-glycidoxypropylmethyldiethoxysilane, or 2-(3,4-epoxycyclohexyl)ethyltrimethoxysilane; an aminosilane, e.g., N-2-(aminoethyl)-3-aminopropyltrimethoxysilane, a reaction product of imidazole and 3-glycidoxypropyltrimethoxysilane, 3-aminopropyltriethoxysilane, or N-phenyl-3-aminopropyltrimethoxysilane; and a mercaptosilane, e.g., 3-mercaptopropyltrimethoxysilane or 3-episulfidoxypropyltrimethoxysilane. Here, the amount of the coupling agent used for surface treatment and the method for surface treatment are not particularly limited.

### Other Additives

In addition to the components (A) to (E), other additives may also be added to the underfill composition of the present invention, if necessary, provided that the object and advantages of the present invention will not be impaired. Examples of such additives include a flame retardant, an ion-trapping agent, an antioxidant, an adhesiveness-imparting agent, a low-stress agent, and a colorant.

A flame retardant may be added to impart flame retardancy. The flame retardant is not particularly limited, and any known flame retardant can be used. Examples thereof include a phosphazene compound, a silicone compound, a zinc molybdate-supported talc, a zinc molybdate-supported zinc oxide, aluminum hydroxide, magnesium hydroxide, and molybdenum oxide.

An ion-trapping agent may be added to prevent heat deterioration and moisture absorption deterioration by trapping ion impurities contained in the resin composition. The ion-trapping agent is not particularly limited, and any known ion-trapping agent can be used. Examples thereof include hydrotalcites, a bismuth hydroxide compound, and a rare-earth oxide.

Examples of the antioxidant include, but are not particularly limited to, a phenol-based antioxidant such as n-octadecyl-3-(3,5-di-t-butyl-4-hydroxyphenyl)propionate, n-octadecyl-3-(3,5-di-t-butyl-4-hydroxyphenyl)acetate, neododecyl-3-(3,5-di-t-butyl-4-hydroxyphenyl)propionate, dodecyl-β-(3,5-di-t-butyl-4-hydroxyphenyl)propionate, ethyl-α-(4-hydroxy-3,5-di-t-butylphenyl)isobutyrate, octadecyl-α-(4-hydroxy-3,5-di-t-butylphenyl)isobutyrate, octadecyl-α-(4-hydroxy-3,5-di-t-butyl-4-hydroxyphenyl)propionate, 2-(n-octylthio)ethyl-3,5-di-t-butyl-4-hydroxyphenylacetate, 2-(n-octadecylthio)ethyl-3,5-di-t-butyl-4-hydroxyphenylacetate, 2-(n-octadecylthio)ethyl-3-(3,5-di-t-butyl-4-hydroxyphenyl)propionate, 2-(2-stearoyloxyethylthio)ethyl-7-(3-methyl-5-t-butyl-4-hydroxyphenyl)heptanoate, 2-hydroxyethyl-7-(3-methyl-5-t-butyl-4-hydroxyphenyl)propionate, or pentaerythritol tetrakis[3-(3,5-di-t-butyl-4-hydroxyphenyl)propionate]; a sulfur-based antioxidant such as dilauryl-3,3'-thiodipropionate, dimyristyl-3,3'-thiodipropionate, distearyl-3,3'-thiodipropionate, ditridecyl-3,3'-thiodipropionate, or pentaerythrityl tetrakis(3-laurylthiopropionate); and a phosphorus-based antioxidant such as tridecyl phosphite, triphenyl phosphite, tris(2,4-di-t-butylphenyl) phosphite, 2-ethylhexyldiphenyl phosphite, diphenyl tridecyl phosphite, 2,2-methylenebis(4,6-di-t-butylphenyl) octyl phosphite, distearyl pentaerythritol diphosphite, bis(2,6-di-t-butyl-4-methylphenyl) pentaerythritol diphosphite, or 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine.

The adhesiveness-imparting agent is not particularly limited, provided that it is a known adhesiveness-imparting agent and that the advantages of the present invention are delivered; any known adhesiveness-imparting agent may be contained, if necessary, to impart adhesiveness or stickiness (pressure-sensitive adhesiveness). Examples of the adhesiveness-imparting agent include a urethane resin, a phenolic resin, a terpene resin, and a silane coupling agent. Particularly, a silane coupling agent is preferred in terms of imparting adhesiveness.

Examples of the silane coupling agent include, but are not particularly limited to, a silane coupling agent such as n-propyltrimethoxysilane, n-propyltriethoxysilane, n-octyltrimethoxysilane, n-octyltriethoxysilane, phenyltrimethoxysilane, phenyltriethoxysilane, methyltrimethoxysilane, methyltriethoxysilane, 2-[methoxy(polyethyleneoxy)propyl]-trimethoxysilane, methoxytri(ethyleneoxy)propyltrimethoxysilane, 3-glycidyloxypropyltrimethoxysilane, 3-aminopropyltrimethoxysilane, 3-mercaptopropyltrimethoxysilane, 3-(methacryloyloxy)propyltrimethoxysilane, 3-isocyanatopropyltriethoxysilane, or 3-isocyanatopropyltrimethoxysilane.

The amount of such additives varies depending on the purpose of the composition. Typically, they are added in an amount of 10% by mass or less based on the whole mass of the composition.

### Production Method for Composition

The underfill composition of the present invention can be produced by the method described below.

For example, the components (A) to (E) may be simultaneously or separately mixed, and stirred, dissolved, and/or dispersed while performing heating treatment, if necessary, to obtain a composition containing the components (A) to (E). Preferably, the epoxy resin curing agent (C) may be added to a composition containing the components (A), (B), (D), and (E), and then the components may be stirred, dissolved, and/or dispersed to obtain a composition containing the components (A) to (E). Further, depending on the intended use, at least one of a flame retardant, a polymerization initiator, or an ion-trapping agent may be added to and mixed with the composition containing the components (A) to (E). Each component may be used alone, or two or more of them may be used in combination.

In the method for producing the composition, the devices used for mixing, stirring, and dispersion are not particularly limited. Specifically, there may be used, for example, a grinding machine equipped with stirring and heating devices, a twin roll mill, a triple roll mill, a ball mill, a planetary mixer, or a colloid mill (e.g., a Masscolloider), and these devices may be used alone or in appropriate combination.

### Cured Product of Underfill Composition

The conditions and methods for curing and molding the underfill composition of the present invention may be those that are known in the art. Preferably, curing by heating in an oven is performed first at 100 to 120°C for at least 0.5 hours and then at 150 to 175°C for at least 2 hours. When the duration of the first heating, at 100 to 120°C, is 0.5 hours or longer, voids that develop after being cured can be prevented. Further, when the duration of the subsequent heating, at 150 to 175°C, is 2 hours or longer, sufficient properties can be given to the cured product.

Moreover, the cured product of the underfill composition of the present invention has a glass transition temperature as measured by TMA (thermomechanical analysis) of 140°C or higher, preferably 145 to 170°C. In addition, the cured product of the underfill composition of the present invention has a storage modulus at 260°C as measured by DMA (dynamic mechanical analysis) of 0.10 GPa or less, preferably 0.01 to 0.09 GPa. Such a composition is suitably used as an underfill material superior in crack resistance during reflow and during storage at high temperatures when used as an underfill material.

Examples of the thermomechanical analyzer used to measure the glass transition temperature of the cured product of the underfill composition of the present invention include the thermal dilatometer presented in the Working Examples section below (TMA8140C by Rigaku Corporation). Moreover, examples of the method for measuring the glass transition temperature of the cured product of the underfill composition of the present invention include the method presented in the Working Examples section below.

Examples of the dynamic mechanical analyzer used to measure the storage modulus of the cured product of the underfill composition of the present invention include the dynamic mechanical analyzer presented in the Working Examples section below (DMA850 by TA Instruments, Inc.). Moreover, examples of the method for measuring the storage modulus of the cured product of the underfill composition of the present invention include the method presented in the Working Examples section below.

### WORKING EXAMPLES

The present invention is described in greater detail hereunder with reference to working and comparative examples; the present invention shall not be limited to the following working examples. Here, in Tables 1 and 2, the amounts of the components added are expressed as parts by mass.

The components used in the working and comparative examples are as shown below. Here, in the following description, the number average molecular weight (Mn) refers to a number average molecular weight calculated from the results of measurement of a ¹H-NMR spectrum performed under the conditions as set forth in the following.

### Measurement Conditions

Instrument: AVANCE III 400 by Bruker Corporation
Measurement frequency: 400 MHz
Sample concentration: 1% by mass (solvent: CDCl₃)
Measurement temperature: 25°C
Internal standard: tetramethylsilane (TMS)

### (A) Biscitraconimide Compound

### Synthesis Example 1 (Production of Biscitraconimide Compound)

A reaction solution was prepared by adding 71.2 g of 2,2,4-trimethylhexamethylenediamine (0.45 mol), 111.0 g of citraconic anhydride (0.99 mol), and 150 g of toluene to a 2 L four-necked glass flask equipped with a stirrer, a Dean-Stark tube, a cooling condenser, and a thermometer, followed by stirring the reaction solution at 80°C for 3 hours to synthesize an amic acid. Next, 40 g of methanesulfonic acid was added to the reaction solution, followed by raising the temperature to 110°C, and then stirring the reaction solution for 16 hours while distilling away water generated as a by-product. After the stirring was over, the reaction solution was washed five times with 200 g of ion-exchange water. Later, by performing stripping under reduced pressure at 60°C, there was obtained 149.7 g (yield 96%) of a target product being a brown liquid at room temperature (25°C) ((A1), number average molecular weight 590).

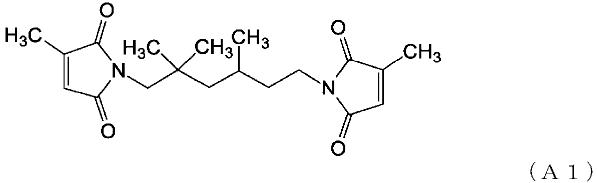

### (A2) Biscitraconimide Compound

A biscitraconimide compound expressed by the following formula (BCI-1500 by Designer Molecules Inc.) (liquid at 25°C, number average molecular weight 2,300) 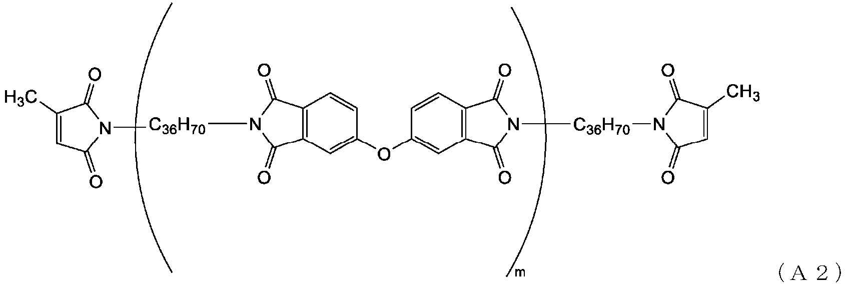
-C₃₆H₇₀- represents a dimer acid frame-derived structure.
m ≈ 2 (average)

### (B) Epoxy Resin

(B1) Bisphenol A-type epoxy resin (jER828EL by Mitsubishi Chemical Holdings Corporation, liquid at 25°C, epoxy group equivalent 189, two epoxy groups per each molecule)
(B2) Aminophenol-type epoxy resin (jER630LSD by Mitsubishi Chemical Holdings Corporation, liquid at 25°C, epoxy group equivalent 95, three epoxy groups per each molecule)

### (C) Epoxy Resin Curing Agent

(C1) Novolac-type allylphenol resin (MEH-8000H originally by Meiwa Plastic Industries, Ltd., now available from UBE corporation), phenolic hydroxy group equivalent 141)
(C2) 3,3'-diethyl-4,4'-diaminodiphenylmethane (KAYAHARD AA by Nippon Kayaku Co., Ltd., amino group equivalent 63.5)
(C3) 4-methylcyclohexane-1,2-dicarboxylic acid anhydride (RIKACID MH by New Japan Chemical Co., Ltd., acid anhydride equivalent 168)
(C4) Active ester compound having a dicyclopentadiene-type phenolic resin structure (HPC-8000-65T by DIC Corporation, active ester group equivalent 223, toluene varnish/solid content 65%); expressed as a solid content in Table 1

### (D) Curing Accelerator

(D1) 2-ethyl-4-methylimidazole (2E4MZ by SHIKOKU KASEI HOLDINGS CORPORATION)
(D2) 2-phenyl-4-methylimidazole (2P4MZ by SHIKOKU KASEI HOLDINGS CORPORATION)
(D3) Bis(tetrabutylphosphonium)dihydrogen pyromellitate (BTBP-pyromellitic acid by HOKKO CHEMICAL INDUSTRY CO., LTD.)
(D4) Trimellitic acid salt (36%) and phenol resin salt (46%) of 1,8-diazabicyclo[5.4.0]undecene-7 (DBU) (U-CAT SA838A by San-Apro Ltd.)

### (E) Inorganic Filler

(E1) Perfectly spherical sol-gel silica (KE-S150 by Nippon Shokubai Co., Ltd., average particle diameter 1.5 µm)
(E2) Spherical silica manufactured by the vaporized metal combustion method (SO-E4-SX by ADMATECHS CO., LTD, average particle diameter 1.0 µm)

Underfill compositions were obtained by mixing the above components at the compounding ratios (parts by mass) shown in Tables 1 and 2. The compositions and the cured products of the respective compositions were evaluated for the infiltration property, Tg, storage modulus, reflow resistance, and high-temperature storage resistance using the methods as shown below. The results are as shown in Tables 1 and 2. Here, the term "inorganic filler content" as shown in Tables 1 and 2 refers to a percentage (by mass) of the inorganic filler (E) based on the whole mass of the composition, the term "trifunctional epoxy content" as used herein refers to a percentage (by mass) of epoxy resins having three or more epoxy groups per each molecule based on the whole mass of the composition, and the term "equivalent ratio (OH/EP ratio)" as used herein refers to a ratio of a molar equivalent (active hydrogen equivalent) of the functional groups in the epoxy resin curing agent as the component (C) to 1 molar equivalent of the epoxy groups in the epoxy resin as the component (B).

### 1. Infiltration Test

A 50 µm-thick polyimide tape was secured by sandwiching the tape between two 30 mm × 50 mm glass plates to prepare a test specimen having a 50 µm gap. The test specimen was heated to 120°C, and the respective compositions of the working and comparative examples were poured into their gaps, and the time required for each composition to infiltrate by 30 mm was measured. When the infiltration of 30 mm took 180 seconds or less, the composition was rated as "A". When the infiltration of 30 mm took longer than 180 seconds, the composition was rated as "B". When the infiltration of 30 mm was unsuccessful, the composition was rated as "C".

### 2. Measurement of Tg

The respective compositions of the working and comparative examples were molded using a 5 × 5 × 15 mm mold frame and cured by heating for 3 hours at 165°C to obtain test specimens. These test specimens were each placed in a thermal dilatometer (TMA8140C by Rigaku Corporation). The heating up program was set to 10°C/min, and a setting of applying a constant load of 19.6 mN was set up to then measure changes in the dimensions of the test specimens in a range from 25 to 260°C. The relationship between the changes in dimensions and temperature was plotted on a graph. In the graph of changes in dimensions versus temperature obtained in such a manner, the glass transition temperature (Tg) was defined as the intersection point of the tangent to the dimensional change-temperature curve below the inflection temperature and the tangent to the dimensional change-temperature curve above the inflection temperature.

### 3. Measurement of Storage Modulus

For the cured products of the respective compositions of the working and comparative examples, the storage modulus was measured from 25 to 260°C at a heating rate of 5°C/min and a frequency of 1 Hz using a dynamic mechanical analyzer (DMA850 by TA Instruments, Inc.).

### 4. Measurement of Cracks due to Reflow

A 20 mm × 20 mm Si chip was stacked on a 30 mm × 30 mm Si chip with a gap of 30 µm therebetween. The respective compositions of the working and comparative examples were heated to 120°C, dispensed in that state, and cured for 2 hours at 165°C to obtain test specimens. After 20 heat cycles of 1 minute or longer at a temperature of 260°C or higher, the test specimens were cut, and the cross-section thereof was observed using a scanning electron microscope (VE-8000 by KEYENCE CORPORATION) to check the presence or absence of cracks.

### 5. Measurement of Cracks due to High-Temperature Storage

A 20 mm × 20 mm Si chip was stacked on a 30 mm × 30 mm Si chip with a gap of 30 µm therebetween. The respective compositions of the working and comparative examples were heated to 120°C, dispensed in that state, and cured for 2 hours at 165°C to obtain test specimens. After storage for 500 hours at 175°C, the test specimens were cut, and the cross-section thereof was observed using a scanning electron microscope (VE-8000 by KEYENCE CORPORATION) to check the presence or absence of cracks.

**Table 1**

| | Working example 1 | Working example 2 | Working example 3 | Working example 4 | Working example 5 | Working example 6 | Working example 7 | Working example 8 | Working example 9 | Working example 10 | Working example 11 |
|---|---|---|---|---|---|---|---|---|---|---|---|
| Biscitraconimide compound (A1) | 80 | 70 | 60 | | 90 | 80 | 80 | 90 | 90 | 90 | 90 |
| Biscitraconimide compound (A2) | | | | 60 | | | | | | | |
| Epoxy resin (B1) | 16 | 24 | 32 | 32 | | | 8 | 8 | 8 | 8 | 8 |
| Epoxy resin (B2) | | | | | 7 | 15 | 7 | | | | |
| Epoxy resin curing agent (C1) | 4 | 6 | 8 | 8 | 3 | 5 | 5 | | | | 2 |
| Epoxy resin curing agent (C2) | | | | | | | | 2 | | | |
| Epoxy resin curing agent (C3) | | | | | | | | | 2 | | |
| Epoxy resin curing agent (C4) | | | | | | | | | | 2 | |
| Equivalent ratio (OH/EP ratio) | 0.3 | 0.3 | 0.3 | 0.3 | 0.3 | 0.2 | 0.3 | 0.7 | 0.3 | 0.1 | 0.3 |
| Curing accelerator (D1) | 1 | 1 | 1 | 1 | 1 | 1 | 1 | 1 | 1 | 1 | |
| Curing accelerator (D2) | | | | | | | | | | | 1 |
| Curing accelerator (D3) | | | | | | | | | | | |
| Curing accelerator (D4) | | | | | | | | | | | |
| Inorganic filler (E1) | 101 | 101 | 101 | 101 | 101 | 101 | 101 | 101 | 101 | 101 | 101 |
| Inorganic filler (E2) | | | | | | | | | | | |
| Inorganic filler content (wt%) | 50 | 50 | 50 | 50 | 50 | 50 | 50 | 50 | 50 | 50 | 50 |
| Trifunctional epoxy content (wt%) | 0 | 0 | 0 | 0 | 3 | 8 | 3 | 0 | 0 | 0 | 0 |
| Infiltration test | A | A | A | B | A | A | A | A | A | B | A |
| Tg (°C) | 147 | 145 | 143 | 144 | 152 | 153 | 150 | 148 | 148 | 148 | 148 |
| Storage modulus (GPa, 25°C) | 6.3 | 6.5 | 6.8 | 6.9 | 6.2 | 6.7 | 6.4 | 6.1 | 6.2 | 6.2 | 6.2 |
| Storage modulus (GPa, 260°C) | 0.08 | 0.09 | 0.100 | 0.100 | 0.08 | 0.100 | 0.09 | 0.07 | 0.08 | 0.08 | 0.07 |
| Presence or absence of cracks during reflow | Absent | Absent | Absent | Absent | Absent | Absent | Absent | Absent | Absent | Absent | Absent |
| Presence or absence of cracks during high-temperature storage | Absent | Absent | Absent | Absent | Absent | Absent | Absent | Absent | Absent | Absent | Absent |

**Table 2**

| | Working example 12 | Working example 13 | Working example 14 | Working example 15 | Working example 16 | Comparative example 1 | Comparative example 2 | Comparative example 3 | Comparative example 4 | Comparative example 5 | Comparative example 6 |
|---|---|---|---|---|---|---|---|---|---|---|---|
| Biscitraconimide compound (A1) | 90 | 90 | 90 | 90 | 90 | 70 | 30 | 90 | | | 30 |
| Biscitraconimide compound (A2) | | | | | | | | | | | |
| Epoxy resin (B1) | 8 | 8 | 8 | 8 | 8 | | | 8 | 75 | | 56 |
| Epoxy resin (B2) | | | | | | 24 | 42 | | | 60 | |
| Epoxy resin curing agent (C1) | 2 | 2 | 2 | 2 | 2 | 6 | | 2 | | | 14 |
| Epoxy resin curing agent (C2) | | | | | | | 28 | | 25 | 40 | |
| Epoxy resin curing agent (C3) | | | | | | | | | | | |
| Epoxy resin curing agent (C4) | | | | | | | | | | | |
| Equivalent ratio (OH/EP ratio) | 0.3 | 0.3 | 0.3 | 0.3 | 0.3 | 0.2 | 1.0 | 0.3 | 1.0 | 1.0 | 0.3 |
| Curing accelerator (D1) | | | 1 | 1 | 1 | 1 | 1 | 1 | 1 | 1 | 1 |
| Curing accelerator (D2) | | | | | | | | | | | |
| Curing accelerator (D3) | 1 | | | | | | | | | | |
| Curing accelerator (D4) | | 1 | | | | | | | | | |
| Inorganic filler (E1) | 101 | 101 | | 25 | 152 | 101 | 101 | 236 | 101 | 101 | 101 |
| Inorganic filler (E2) | | | 101 | | | | | | | | |
| Inorganic filler content (wt%) | 50 | 50 | 50 | 20 | 60 | 50 | 50 | 70 | 50 | 50 | 50 |
| Trifunctional epoxy content (wt%) | 0 | 0 | 0 | 0 | 0 | 12 | 21 | 0 | 0 | 0 | 0 |
| Infiltration test | A | A | B | A | A | A | A | B | A | A | A |
| Tg (°C) | 148 | 148 | 148 | 150 | 150 | 155 | 162 | 150 | 105 | 155 | 124 |
| Storage modulus (GPa, 25°C) | 6.3 | 6.1 | 6.1 | 3.9 | 8.0 | 7.0 | 7.8 | 10.0 | 6.1 | 7.3 | 5.6 |
| Storage modulus (GPa, 260°C) | 0.07 | 0.08 | 0.08 | 0.05 | 0.09 | 0.120 | 0.170 | 0.19 | 0.09 | 0.34 | 0.06 |
| Presence or absence of cracks during reflow | Absent | Absent | Absent | Absent | Absent | Present | Present | Present | Absent | Present | Absent |
| Presence or absence of cracks during high-temperature storage | Absent | Absent | Absent | Absent | Absent | Absent | Absent | Absent | Present | Present | Present |

As can be seen from the results shown in Tables 1 and 2, it became clear that an underfill composition containing a biscitraconimide compound, an epoxy resin, an epoxy resin curing agent, a curing accelerator, and an inorganic filler in specific amounts-and whose cured product exhibits a glass transition temperature as measured by TMA (thermomechanical analysis) of 140 °C or higher and a storage modulus of 0.10 GPa or less at 260 °C by DMA (dynamic mechanical analysis)-results in a reduced occurrence of cracks during reflow and due to storage at high temperatures. The composition of the present invention is therefore suitable as an underfill composition having high reliability.

## Claims

1. An underfill composition comprising the components of:
(A) a biscitraconimide compound expressed by the following formula (1) in an amount of 25 to 75% by mass based on the whole mass of the composition: 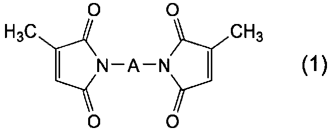 wherein A in the formula (1) represents a divalent organic group;
(B) an epoxy resin having at least two epoxy groups per each molecule in an amount of 0.1 to 20% by mass based on the whole mass of the composition;
(C) an epoxy resin curing agent in an amount such that a molar equivalent ratio of epoxy-reactive functional groups in the component (C) to 1 mol of epoxy groups in the component (B) is 0.05 to 8.0;
(D) a curing accelerator in an amount of 0.0001 to 15% by mass based on the whole mass of the composition; and
(E) an inorganic filler in an amount of 20 to 60% by mass based on the whole mass of the composition, wherein a percentage of epoxy resins having three or more epoxy groups per each molecule in the component (B) is 10% by mass or less based on the whole mass of the composition, and a cured product of the composition has a glass transition temperature as measured by thermomechanical analysis of 140°C or higher and a storage modulus at 260°C as measured by dynamic mechanical analysis of 0.10 GPa or less.

2. The underfill composition according to claim 1, wherein A in the formula (1) is a group selected from dimer acid frame-derived hydrocarbon groups, and the groups expressed by the following structures: 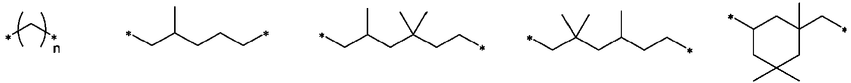 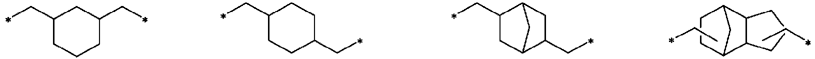 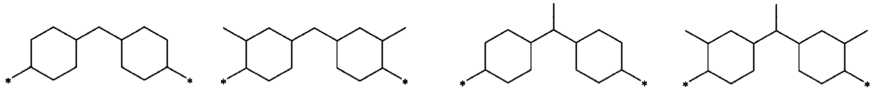 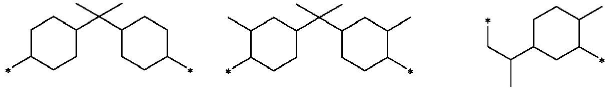 wherein each * represents a bond to a nitrogen atom in the citraconimide group; and n is 1 to 20.

3. The underfill composition according to claim 1, wherein the component (A) has a number average molecular weight of 200 to 10,000.

4. The underfill composition according to claim 1, wherein the epoxy resin curing agent (C) is at least one selected from an amine compound, a phenolic compound, an acid anhydride compound, and an active ester compound.

5. The underfill composition according to claim 1, wherein the curing accelerator (D) is at least one selected from an imidazole-based curing accelerator, an organic phosphorus-based curing accelerator, and a tertiary amine-based curing accelerator.

6. The underfill composition according to claim 1, wherein the inorganic filler (E) is a spherical sol-gel silica having an average particle diameter of 0.01 to 5 µm.
